# EUROPÄISCHE PATENTANMELDUNG

(11) **EP 4 156 496 A1**
(43) Veröffentlichungstag der Anmeldung: **29.03.2023**
(21) Anmeldenummer: 22192316.2
(22) Anmeldetag: 26.08.2022
(51) Int. Cl.: H02P 6/20, H02P 6/26

(54) **ANTRIEBSSYSTEM**

(30) Priorität: 28.09.2021 DE 102021125137
(71) Anmelder: Miele & Cie. KG, 33332 Gütersloh (DE)
(72) Erfinder: Rodehüser, Tobias, 59329 Wadersloh (DE)

(57) **Zusammenfassung**

Die Erfindung betrifft ein Antriebssystem mit wenigstens einem Synchronmotor (1) mit einem Stator (13) und mit einem Rotor und mit wenigstens einer Steuerungseinheit, welche ausgebildet ist, wenigstens den Synchronmotor (1) zu betreiben, dadurch gekennzeichnet, dass die Steuerungseinheit ausgebildet ist, als Blockierungserkennung des Synchronmotors (1) den Stator (13) mit einem ausreichend hohen Statorstrom (IS) mit einer ersten Polarität zu bestromen, um eine Drehbewegung des Rotors zu veranlassen, den infolge der Bestromung mit der ersten Polarität eingeprägten Statorstrom zu erfassen und/oder die Bestromung mit dem Statorstrom (IS) zu beenden und die sich hierbei einstellende induzierte Polradspannung (UP) zu erfassen, den Stator (13) mit einem ausreichend hohen Statorstrom (IS) mit einer der ersten Polarität entgegengesetzten zweiten Polarität zu bestromen, um eine Drehbewegung des Rotors zu veranlassen, und den infolge der Bestromung mit der zweiten Polarität eingeprägten Statorstrom zu erfassen und/oder die Bestromung mit dem Statorstrom (IS) zu beenden und die sich hierbei einstellende induzierte Polradspannung (UP) zu erfassen, wobei die Steuerungseinheit ferner ausgebildet ist, aus den bezüglich der ersten Polarität erfassten Werten des eingeprägten Statorstroms und/oder der induzierten Polradspannung (UP) und aus den bezüglich der zweiten Polarität erfassten Werten des eingeprägten Statorstroms und/oder der induzierten Polradspannung (UP) einen Stillstand des Rotors zu erkennen.

## Beschreibung

Die Erfindung betrifft ein Antriebssystem gemäß dem Oberbegriff des Patentanspruchs 1, ein Gerät mit wenigstens einem derartigen Antriebssystem gemäß dem Patentanspruch 9 sowie ein Verfahren zum Betrieb eines derartigen Antriebssystems gemäß dem Patentanspruch 10.

Zu den bekannten elektrischen Motoren gehören die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Dies kann das Drehverhalten des Synchronmotors z.B. beim Anlauf sowie in Abhängigkeit der anzutreibenden Last gezielt beeinflussen.

Als kostengünstige Alternative zu mittels Frequenzumrichtern betriebenen Synchronmotoren ist es bei einfachen Anwendungen wie z.B. bei Laugenpumpen in Waschmaschinen bekannt ungeregelte Einphasen-Synchronmotoren als Antriebe z.B. von Laugenpumpen zum Abpumpen der Lauge aus dem Waschraum einzusetzen. Dies gilt ebenso für Umflutpumpen von Waschmaschinen. Hierbei werden üblicherweise permanenterregte Einphasen-Synchronmotoren eingesetzt, so dass auf einen elektrischen Kontakt vom Stator zum Rotor mittels Schleifringen oder Bürsten verzichtet werden kann.

Wie bereits allgemein erwähnt ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine H-Brücke ausreichend, welche von einer Steuerungseinheit betrieben werden kann. Dies kommt insbesondere einfachen Anwendungen ungeregelt mit konstanter Drehzahl wie z.B. bei Laugenpumpen in Waschmaschinen zugute.

Wie bereits erwähnt kommen in Waschmaschinen bzw. in Waschautomaten verschiedene Pumpen zum Einsatz, z.B. die Umflutpumpe oder die Laugenpumpen zum Abpumpen des Wassers aus dem Waschautomaten. Dabei können sich Fusseln, Knöpfe oder andere Gegenstände, die sich im Wasserkreislauf befinden, vor das Flügelrad der Pumpe setzen und dieses blockieren. Dies kann dazu führen, dass keine Umflutung in der Waschmaschine mehr stattfindet bzw. das Wasser nicht abgepumpt werden kann, wodurch die Reinigungswirkung des Waschvorgangs beeinträchtigt und die Wäsche nicht mehr richtig sauber werden kann. Bei der Ablaufpumpe kann eine Blockierung dazu führen, dass das Wasser nicht mehr in der Waschmaschine abgepumpt werden kann. Des Weiteren kann eine Blockade dazu führen, dass die Pumpe durch eine dauerhafte Ansteuerung im Blockierungsfall unzulässig überhitzt.

Der Erfindung stellt sich somit das Problem, ein Antriebssystem der eingangs beschriebenen Art bereitzustellen, so dass ein unzulässiger Stillstand bzw. eine Blockade des Motors des Antriebssystems erkannt werden kann. Dies soll insbesondere möglichst einfach, kostengünstig, bauraumsparend, energiesparend und bzw. oder verlässlich erfolgen können. Zumindest soll eine Alternative zu bekannten derartigen Antriebssystemen geschaffen werden.

Erfindungsgemäß wird dieses Problem durch ein Antriebssystem mit den Merkmalen des Patentanspruchs 1, durch ein Gerät mit den Merkmalen des Patentanspruchs 9 sowie durch ein Verfahren mit den Merkmalen des Patentanspruchs 10 gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem Synchronmotor mit einem Stator und mit einem Rotor und mit wenigstens einer Steuerungseinheit, welche ausgebildet ist, wenigstens den Synchronmotor zu betreiben.

Das Antriebssystem ist dadurch gekennzeichnet, dass die Steuerungseinheit ausgebildet ist, als Blockierungserkennung des Synchronmotors
- den Stator mit einem ausreichend hohen Statorstrom mit einer ersten Polarität zu bestromen, um eine Drehbewegung des Rotors zu veranlassen,
- den infolge der Bestromung mit der ersten Polarität eingeprägten Statorstrom zu erfassen und bzw. oder die Bestromung mit dem Statorstrom der ersten Polarität zu beenden und die sich hierbei einstellende induzierte Polradspannung zu erfassen,
- den Stator mit einem ausreichend hohen Statorstrom mit einer der ersten Polarität entgegengesetzten zweiten Polarität zu bestromen, um eine Drehbewegung des Rotors zu veranlassen, und
- den infolge der Bestromung mit der zweiten Polarität eingeprägten Statorstrom zu erfassen und bzw. oder die Bestromung mit dem Statorstrom der zweiten Polarität zu beenden und die sich hierbei einstellende induzierte Polradspannung zu erfassen,

wobei die Steuerungseinheit ferner ausgebildet ist,
   - aus den bezüglich der ersten Polarität erfassten Werten des eingeprägten Statorstroms und bzw. oder der induzierten Polradspannung und
   - aus den bezüglich der zweiten Polarität erfassten Werten des eingeprägten Statorstroms und bzw. oder der induzierten Polradspannung
einen Stillstand des Rotors zu erkennen.

Ein derartiges Erkennen kann durch den Vergleich eines erfassten Wertes mit einem Grenzwert bzw. mit einem Schwellwert der entsprechenden Größe erfolgen, indem ein Stillstand erkannt wird, falls der erfasste Wert unterhalb des Grenzwertes bzw. des Schwellwertes liegt. Ebenso kann eine Bewegung bzw. ein Nicht-Stillstand erkannt werden, falls der erfasste Wert den Grenzwert bzw. den Schwellwert erreicht oder überschreitet. Alternativ kann das Einhalten des Grenzwertes bzw. des Schwellwertes noch dem Stillstand zugerechnet werden.

In jedem Fall liegt der vorliegenden Erfindung die Erkenntnis zugrunde, dass ein Synchronmotor bauartbedingt stets wenigstens zwei Vorzugslagen besitzt, welche auch als Raststellungen bezeichnet werden können. Wenn der Stator nicht bestromt wird, befindet sich der Rotor in einer der Vorzugslagen. Wird im Stator nun ein ausreichend hoher Strom eingeprägt, welcher ein magnetisches Feld zur Folge hat, verharrt der Rotor entweder in seiner aktuellen Position, d.h. in einer der beiden Vorzugslagen, oder aber der Rotor bewegt sich in eine andere Vorzugslage. Aufgrund des Umstands, dass der Rotor auch bei einer derartigen Bestromung mit einer ersten Polarität in seiner aktuellen Position verharren kann (was fälschlicherweise als Blockierung angesehen werden könnte), wird erfindungsgemäß das Bestromen mit einer zweiten Polarität, die der ersten Polarität entgegengesetzt ist, für die entgegengesetzte Vorzugslage des Rotors wiederholt, so dass wenigstens dann eine Bewegung des Rotors eintritt, sofern der Rotor nicht blockiert ist.

In jedem Fall ist die Bewegung des Rotors über die Stromform erkennbar. Es kann aber auch die induzierte Spannung beim Abschalten des Stroms erkannt werden, ob sich der Rotor in Bewegung versetzt hatte oder nicht.

Um nun die Blockierung sicher zu erkennen, kann seitens der Steuerungseinheit erfindungsgemäß mit anderen Worten wie folgt vorgegangen werden:
1. Bestromen des Stators mit einem ausreichend hohen DC-Strom mit einer ersten Polarität,
   a. Messung des eingeprägten Stroms,
   b. Messung der induzierten Spannung beim Abschalten des DC-Stroms,
2. Bestromen des Stators mit einem ausreichend hohen DC-Strom mit einer zweiten Polarität, die der ersten Polarität entgegengesetzt ist,
   a. Messung des eingeprägten Stroms, und
   b. Messung der induzierten Spannung beim Abschalten des DC-Stroms.

Es muss eine Bewegung bei einem der beiden Schritte des Bestromens mit der ersten und der zweiten Polarität stattfinden und erkannt werden, ansonsten ist der Rotor blockiert. Somit ist erfindungsgemäß eine sichere Erkennung einer Blockierung des Rotors des Synchronmotors des Antriebssystems möglich. Dies kann vergleichsweise einfach und ohne zusätzliche Hardware erfolgen.

Gemäß einem Aspekt der Erfindung ist die Steuerungseinheit ferner ausgebildet, in Reaktion auf einen erkannten Stillstand des Rotors einen Hinweis hierüber an einen Benutzer des Antriebssystems auszugeben, vorzugsweise anzuzeigen. Hierdurch kann der Benutzer auf eine erkannte Blockade hingewiesen werden, so dass der Benutzer beispielsweise die Blockade, beispielsweise durch Entfernen blockierender Gegenstände, beseitigen oder zumindest die Benutzung des entsprechenden Gerätes unterlassen kann. Ein derartiger Hinweis kann optisch, akustisch und bzw. oder haptisch seitens des Gerätes und bzw. oder seitens eines anderen Gerätes wie beispielsweise eines mobilen Endgerätes des Benutzers, beispielsweise eines Smartphones, eines Tablets, einer Smartwatch oder dergleichen, erfolgen. Dies vorzugsweise durch eine optische Anzeige bzw. durch einen optischen Hinweis umzusetzen kann vergleichsweise einfach sein.

Gemäß einem weiteren Aspekt der Erfindung ist die Steuerungseinheit ferner ausgebildet, in Reaktion auf einen erkannten Stillstand des Rotors jeweils mit der ersten und der zweiten Polarität
- den Stator mit einem Statorstrom zur Durchführung wenigstens einer Betriebsbewegung zu bestromen,
- erneut den eingeprägten Statorstrom zu erfassen und bzw. oder die Bestromung mit dem Statorstrom zu beenden und die sich hierbei einstellende induzierte Polradspannung zu erfassen, und,
- falls aus den Werten des erneut erfassten eingeprägten Statorstroms und bzw. oder aus der erneut erfassten induzierten Polradspannung erneut ein Stillstand des Rotors in der erkannt wird, den Stator mit einem Statorstrom zur Durchführung wenigstens einer Betriebsbewegung entgegen der Vorzugsrichtung zu bestromen.

Mit anderen Worten erfolgt der Versuch eines Betriebs des Rotors, um eine vorliegende Blockade zu überwinden. Dabei liegt diesem Aspekt der Erfindung die Erkenntnis zugrunde, dass eine derartige Blockade üblicherweise die Drehung des Rotors des Synchronmotors lediglich in eine der beiden Drehrichtungen blockiert und somit die Blockade gelöst bzw. aufgehoben werden kann, indem der Rotor sich ggfs. in beide Richtungen nacheinander dreht. Dabei erfolgt dieses Drehen zeitlich länger und bzw. oder mit einer stärkeren Bestromung als der zuvor betrachtete Blockadetest, da nun nicht nur zwischen einer Bewegung und einem Stillstand unterschieden, sondern eine mechanische Blockade überwunden werden soll.

Gemäß einem weiteren Aspekt der Erfindung ist der Statorstrom zum Veranlassen der Drehbewegung des Rotors mit der ersten bzw. zweiten Polarität jeweils geringer als der Statorstrom zur Durchführung wenigstens der Betriebsbewegung. Dies kann bewirken bzw. sicherstellen, dass die mechanische Blockade aufgehoben bzw. überwunden werden kann, wie zuvor beschrieben.

Mit anderen Worten wird in einer ersten Phase der Blockadetest wie vorstehend beschrieben mit einer geringen Stromstärke ausgeführt, so dass ein nicht blockierter Rotor in Bewegung gesetzt wird. Erst wenn hierbei eine Blockade erkannt wird, wird in einer zweiten Phase ein erneuter Versuch unternommen, dieses Mal mit einer höheren Stromstärke. Führt auch das nicht zu einem Erfolg, wird versucht, den Stator so zu bestromen bzw. den Motor so anzusteuern, dass er entgegen seiner Vorzugsrichtung dreht. So besteht eine Chance, dass z.B. ein blockierender Fremdkörper gelöst werden kann.

Gemäß einem weiteren Aspekt der Erfindung ist der Synchronmotor ein geregelter Synchronmotor und die Steuerungseinheit ausgebildet, die Bewegung des Rotors drehzahlgeregelt zu betreiben. Dies kann die Nutzungsmöglichkeiten des Synchronmotors verbessern bzw. erweitern.

Gemäß einem weiteren Aspekt der Erfindung ist die Steuerungseinheit ferner ausgebildet, die Blockierungserkennung auszuführen:
- unmittelbar vor jedem Start einer Benutzung des Synchronmotors,
- unmittelbar vor dem Start einer ersten Benutzung des Synchronmotors bei einer Benutzung eines Geräts, welches den Synchronmotor verwendet, oder
- zwischen zwei Benutzungen des Synchronmotors.

Dies kann jeweils ein geeigneter Zeitpunkt sein, um den Synchronmotor auf das Vorliegen einer Blockade zu überprüfen.

Gemäß einem weiteren Aspekt der Erfindung ist die Steuerungseinheit ferner ausgebildet, die Blockierungserkennung ausgehend von einem stillstehenden Rotor des Synchronmotors auszuführen.

Die vorliegende Erfindung betrifft auch ein Gerät, vorzugsweise ein Haushaltsgerät, besonders vorzugsweise eine Waschmaschine oder einen Geschirrspüler, mit wenigstens einem Antriebssystem wie zuvor beschrieben. Hierdurch kann ein Gerät geschaffen werden, um die zuvor beschriebenen Eigenschaften und Vorteile eines erfindungsgemäßen Antriebssystems umsetzen und nutzen zu können. Dies kann insbesondere bei Geräten und insbesondere bei Haushaltsgeräten erfolgen, welche wenigstens eine Pumpe zum Fördern von Fluiden aufweisen. Dies könnten insbesondere die Umflutpumpe und bzw. oder die Laugenpumpe einer Waschmaschine bzw. eines Waschautomaten sein, ebenso eine entsprechende Pumpe einer Geschirrspülmaschine.

Die vorliegende Erfindung betrifft ferner ein Verfahren zum Betrieb eines Antriebssystems wie zuvor beschrieben mit wenigstens den folgenden Schritten:
- Bestromen des Stators mit einem ausreichend hohen Statorstrom mit einer ersten Polarität, um eine Drehbewegung des Rotors zu veranlassen,
- Erfassen des infolge der Bestromung mit der ersten Polarität eingeprägten Statorstroms und bzw. oder Beenden der Bestromung mit dem Statorstrom und Erfassen der sich hierbei einstellenden induzierten Polradspannung,
- Bestromen des Stators mit einem ausreichend hohen Statorstrom mit einer der ersten Polarität entgegengesetzten zweiten Polarität, um eine Drehbewegung des Rotors in zu veranlassen,
- Erfassen des infolge der Bestromung mit der zweiten Polarität eingeprägten Statorstroms und bzw. oder Beenden der Bestromung mit dem Statorstrom und Erfassen der sich hierbei einstellenden induzierten Polradspannung, und
- Erkennen eines Stillstands des Rotors
   o aus den infolge der Bestromung mit der ersten Polarität erfassten Werten des eingeprägten Statorstroms und bzw. oder der induzierten Polradspannung und
   o aus den infolge der Bestromung mit der zweiten Polarität erfassten Werten des eingeprägten Statorstroms und bzw. oder der induzierten Polradspannung.

Hierdurch kann ein Verfahren zur Verfügung gestellt werden, um die zuvor beschriebenen Eigenschaften und Vorteile eines erfindungsgemäßen Antriebssystems als ein Verfahren umsetzen und nutzen zu können.

Es sei angemerkt, dass im Kontext dieser Erfindung das Einprägen eines Stroms synonym zum Vorgeben einer Spannung und eines sich daraufhin einstellenden Stroms zu verstehen ist.

Es sei angemerkt, dass im Sinne der Erfindung der vorliegenden Patentanmeldung unter "keiner Bewegung" bzw. unter "Stillstand" auch sehr geringe Bewegungen des Rotors gegenüber dem Stator verstanden werden sollen, welche auftreten können, falls sich der Rotor in einer Vorzugslage bzw. in einer Raststellung befindet und ein Strom eingeprägt wird. Die Winkeländerung entspricht dann genau dem Ruhewinkel bzw. dem natürlichen Winkel des Rotors, ist allerdings sehr gering, da die Winkeländerung nur wenige Grad beträgt. Diese Bewegung ist anhand des Stroms und der induzierten Spannung nicht erkennbar und kann daher vernachlässigt werden, so dass auch in diesem Fall im Sinne der Erfindung der vorliegenden Patentanmeldung der Einfachheit halber von keiner Bewegung bzw. von Stillstand gesprochen werden soll.

Ein Ausführungsbeispiel der Erfindung ist in den Zeichnungen rein schematisch dargestellt und wird nachfolgend näher beschrieben. Es zeigt
- Figur 1: ein Ersatzschaltbild eines Synchronmotors eines erfindungsgemäßen Antriebssystems;
- Figur 2: ein Ablaufdiagramm eines erfindungsgemäßen Verfahrens; und

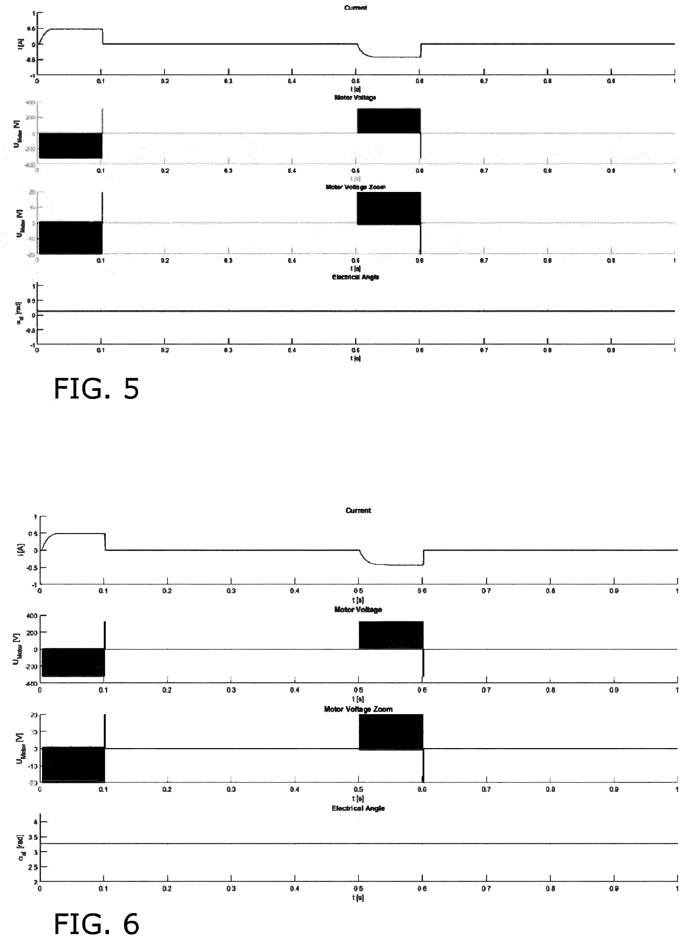

- Figuren 3 bis 6: verschiedene Messdiagramme verschiedener Anwendungsszenerien des erfindungsgemäßen Antriebssystems bzw. Verfahrens.

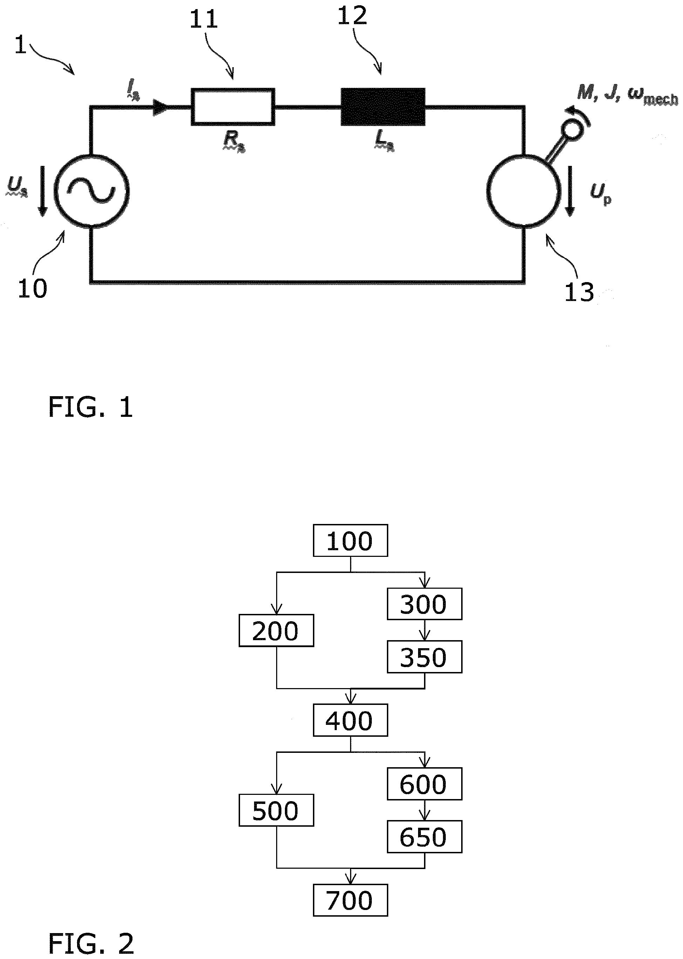

Das Ersatzschaltbild eines erfindungsgemäßen Synchronmotors 1 der Figur 1 weist eine Spannungsquelle 10 auf, über welcher eine Statorspannung Us anliegt, welche entsprechend auch über einen Stator 13 des Synchronmotors 1 anliegt. Die Statorspannung Us bewirkt einen Statorstrom Iₛ des Synchronmotors 1, welcher durch ein Widerstandselement 11 mit einem ohmschen Widerstand Rs und durch ein Induktionselement 12 mit einer Induktivität Ls fließt. Der Statorstrom Iₛ des Synchronmotors 1 bewirkt eine Drehung eines Rotors (nicht dargestellt) mit einem Drehmoment M, mit einer Leistung J bzw. mit einer Kreisfrequenz ω_{mech}. Ohne eine geeignete Ansteuerung wird keine Drehbewegung erzeugt. Es muss im einfachsten Fall nur eine Sinusspannung eingestellt werden.

Wird das Bestromen des Stators 13 beendet, so dreht sich der Rotor mit schnell sinkender Kreisfrequenz ω_{mech} kurzzeitig weiter bis der Rotor den Stillstand in einer seiner Ruhelagen bzw. Raststellungen erreicht. Während dieses Auslaufens der Bewegung wird vom Rotor eine Polradspannung U_{P} bzw. eine Läuferspannung U_{P} im Stator 13 induziert. Die Werte dieser Parameter können jeweils von einer Steuerungseinheit (nicht dargestellt) des Antriebssystems 1 erfasst bzw. bestimmt werden, welche den Synchronmotor 13 auch steuern bzw. betreiben kann.

Um nun eine Blockade des Rotors, beispielsweise unmittelbar vor einer Nutzung des Synchronmotors 1, zu erkennen, ist die Steuerungseinheit des Antriebssystems 1 ausgebildet, den Stator 13 mit einem ausreichend hohen Statorstrom I_{S} mit einer ersten Polarität zu bestromen, um eine Drehbewegung des Rotors zu veranlassen, den eingeprägten Statorstrom zu erfassen und bzw. oder die Bestromung mit dem Statorstrom I_{S} zu beenden und die sich hierbei einstellende induzierte Polradspannung U_{P} zu erfassen, den Stator 13 mit einem ausreichend hohen Statorstrom I_{S} mit einer der ersten Polarität entgegengesetzten zweiten Polarität zu bestromen, um eine Drehbewegung des Rotors zu veranlassen, und den eingeprägten Statorstrom zu erfassen und bzw. oder die Bestromung mit dem Statorstrom I_{S} zu beenden und die sich hierbei einstellende induzierte Polradspannung U_{P} zu erfassen, wobei die Steuerungseinheit ferner ausgebildet ist, aus den infolge der Bestromung mit der ersten Polarität erfassten Werten des eingeprägten Statorstroms und bzw. oder der induzierten Polradspannung U_{P} und aus den infolge der Bestromung mit der zweiten Polarität erfassten Werten des eingeprägten Statorstroms und bzw. oder der induzierten Polradspannung U_{P} einen Stillstand des Rotors zu erkennen.

Dies kann entsprechend mittels eines erfindungsgemäßen Verfahrens der Figur 2 umgesetzt werden, indem zunächst ein Bestromen 100 des Stators 13 mit einem ausreichend hohen Statorstrom I_{S} mit einer ersten Polarität erfolgt, um eine Drehbewegung des Rotors zu veranlassen. Dann erfolgt ein Erfassen 200 des eingeprägten Statorstroms. Alternativ oder zusätzlich erfolgt ein Beenden 300 der Bestromung mit dem Statorstrom I_{S} und ein Erfassen 350 der sich hierbei einstellenden induzierten Polradspannung U_{P} der ersten Richtung. Nun werden diese Schritte für die entgegengesetzte Polarität wiederholt, indem ein Bestromen 400 des Stators 13 mit einem ausreichend hohen Statorstrom I_{S} mit einer der ersten Polarität entgegengesetzten zweiten Polarität erfolgt, um eine Drehbewegung des Rotors zu veranlassen. Dabei erfolgt ein Erfassen 500 des eingeprägten Statorstroms sowie zusätzlich oder alternativ ein Beenden 600 der Bestromung mit dem Statorstrom I_{S} und ein Erfassen 650 der sich hierbei einstellenden induzierten Polradspannung U. Basierend auf den Werten dieser Größen bzw. dieser Parameter erfolgt dann ein Erkennen 700 eines Stillstands des Rotors aus den infolge der Bestromung mit der ersten Polarität erfassten Werten des eingeprägten Statorstroms und bzw. oder der induzierten Polradspannung U_{P} und aus den infolge der Bestromung mit der zweiten Polarität erfassten Werten des eingeprägten Statorstroms und bzw. oder der induzierten Polradspannung U_{P}.

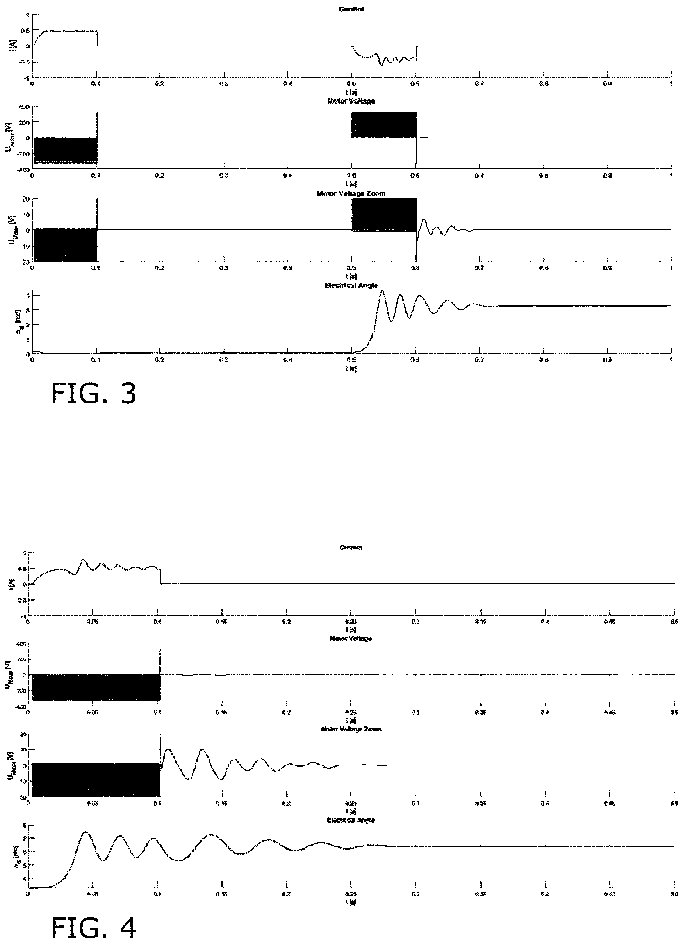

Beispielsweise kann dies umgesetzt werden, indem sich der Rotor in einer ersten Vorzugslage befindet und nicht blockiert ist. Es wird ein Statorstrom I_{S} mit einer ersten Polarität eingeprägt. Es findet keine Bewegung des Rotors statt. Es wird über den Statorstrom I_{S} und bzw. oder über die Messung der induzierten Polradspannung U_{P} beim Abschalten des Statorstroms I_{S} erkannt, dass keine Bewegung erfolgt ist. Es wird dann ein Statorstrom I_{S} mit einer zweiten Polarität eingeprägt. Es findet eine Bewegung des Rotors statt. Es wird über den Statorstrom I_{S} und bzw. oder die Messung der induzierten Polradspannung U_{P} beim Abschalten des Statorstroms I_{S}, siehe Figur 3, erkannt, dass eine Bewegung (in eine zweite Vorzugslage) erfolgt ist. Somit ist der Synchronmotor 1 nicht blockiert und kann verwendet werden.

Beispielsweise kann dies umgesetzt werden, indem sich der Rotor in einer zweiten Vorzugslage befindet und nicht blockiert ist. Es wird ein Statorstrom I_{S} mit einer ersten Polarität eingeprägt. Es findet eine Bewegung des Rotors statt. Es wird über den Statorstrom I_{S} und bzw. oder die Messung der induzierten Polradspannung U_{P} beim Abschalten des Statorstroms I_{S}, siehe Figur 4, erkannt, dass eine Bewegung (in eine erste Vorzugslage) erfolgt ist. Somit ist der Synchronmotor 1 nicht blockiert und kann verwendet werden.

Beispielsweise kann dies umgesetzt werden, indem sich der Rotor in der ersten Vorzugslage befindet und blockiert ist. Es wird ein Statorstrom I_{S} mit einer ersten Polarität eingeprägt. Es findet keine Bewegung des Rotors statt. Es wird über den Statorstrom I_{S} und bzw. oder über die Messung der induzierten Polradspannung U_{P} beim Abschalten des Statorstroms I_{S} erkannt, dass keine Bewegung erfolgt ist. Es wird ein Statorstrom I_{S} mit einer zweiten Polarität eingeprägt. Es findet keine Bewegung des Rotors statt. Es wird über den Statorstrom I_{S} und bzw. oder die Messung der induzierten Polradspannung U_{P} beim Abschalten des Statorstroms I_{S}, siehe Figur 3, erkannt, dass keine Bewegung erfolgt ist. Somit ist der Synchronmotor 1 blockiert und kann nicht verwendet werden.

Beispielsweise kann dies umgesetzt werden, indem sich der Rotor in der zweiten Vorzugslage befindet und blockiert ist. Es wird ein Statorstrom I_{S} mit einer ersten Polarität eingeprägt. Es findet keine Bewegung des Rotors statt. Es wird über den Statorstrom I_{S} und bzw. oder über die Messung der induzierten Polradspannung U_{P} beim Abschalten des Statorstroms I_{S} erkannt, dass keine Bewegung erfolgt ist. Es wird ein Statorstrom I_{S} mit einer zweiten Polarität eingeprägt. Es findet keine Bewegung des Rotors statt. Es wird über den Statorstrom I_{S} und bzw. oder die Messung der induzierten Polradspannung U_{P} beim Abschalten des Statorstroms I_{S}, siehe Figur 3, erkannt, dass keine Bewegung erfolgt ist. Somit ist der Synchronmotor 1 blockiert und kann nicht verwendet werden.

Erfindungsgemäß kann somit durch das Einprägen von zwei ausreichend hohen DC-Strömen als Statorströme I_{S}, deren Stromhöhe jeweils für die Ausrichtung des Rotors ausreichend stark ist, und das Messen der tatsächlich eingeprägten Ströme I_{S} und bzw. oder der jeweils induzierten Polradspannung U_{P} beim Abschalten des DC-Stroms eine Blockierung sicher erkannt werden. Beim Messen der induzierten Polradspannung U_{P} ist darauf zu achten, dass die Bestromungszeit so gewählt ist, dass sich der Rotor im Falle einer Bewegung auch noch in Bewegung befindet und schwingt, da ansonsten keine Polradspannung U_{P} induziert und erfasst werden kann.

Zum Einprägen des Statorstroms wird eine H-Brücke verwendet. Der Statorstrom wird geregelt. Bewegt sich der Rotor nicht oder nur sehr wenig, wirkt nur der ohmsche und induktive Anteil und es gibt keine induzierte Spannung, siehe Ersatzschaltbild der Figur 1. Deshalb erkennt man dabei annähernd ein PT-1 Einschwingverhalten. Bewegt sich der Rotor jedoch, wird eine Polradspannung U_{P} induziert, welche als Störgröße am Strom erkennbar ist.

### Bezugszeichenliste (Bestandteil der Beschreibung)

- J: Statorstrom Leistung
- L_{S}: Induktivität
- M: Drehmoment
- U_{P}: induzierte Polradspannung bzw. Läuferspannung
- U_{S}: Statorspannung
- R_{S}: ohmscher Widerstand
- ω_{mech}: Kreisfrequenz

- 1: Synchronmotor
- 10: Spannungsquelle
- 11: Widerstandselement
- 12: Induktionselement
- 13: Stator

- 100: Bestromen des Stators 13 für eine Drehbewegung des Rotors in eine erste Richtung
- 200: Erfassen des eingeprägten Statorstroms der ersten Richtung
- 300: Beenden der Bestromung mit dem Statorstrom
- 350: Erfassen der induzierten Polradspannung U_{P} der ersten Richtung
- 400: Bestromen des Stators 13 für eine Drehbewegung des Rotors in eine zweite Richtung
- 500: Erfassen des eingeprägten Statorstroms der zweiten Richtung
- 600: Beenden der Bestromung mit dem Statorstrom
- 650: Erfassen der induzierten Polradspannung U_{P} der zweiten Richtung
- 700: Erkennen eines Stillstands des Rotors in beide Richtungen

## Patentansprüche

1. Antriebssystem
mit wenigstens einem Synchronmotor (1) mit einem Stator (13) und mit einem Rotor und
mit wenigstens einer Steuerungseinheit, welche ausgebildet ist, wenigstens den Synchronmotor (1) zu betreiben,
**dadurch gekennzeichnet, dass**
die Steuerungseinheit ausgebildet ist, als Blockierungserkennung des Synchronmotors (1)
• den Stator (13) mit einem ausreichend hohen Statorstrom (ls) mit einer ersten Polarität zu bestromen, um eine Drehbewegung des Rotors zu veranlassen,
• den infolge der Bestromung mit der ersten Polarität eingeprägten Statorstrom zu erfassen und/oder die Bestromung mit dem Statorstrom (ls) zu beenden und die sich hierbei einstellende induzierte Polradspannung (U_{P}) zu erfassen,
• den Stator (13) mit einem ausreichend hohen Statorstrom (ls) mit einer der ersten Polarität entgegengesetzten zweiten Polarität zu bestromen, um eine Drehbewegung des Rotors zu veranlassen, und
• den infolge der Bestromung mit der zweiten Polarität eingeprägten Statorstrom zu erfassen und/oder die Bestromung mit dem Statorstrom (ls) zu beenden und die sich hierbei einstellende induzierte Polradspannung (U_{P}) zu erfassen,
wobei die Steuerungseinheit ferner ausgebildet ist,
• aus den bezüglich der ersten Polarität erfassten Werten des eingeprägten Statorstroms und/oder der induzierten Polradspannung (U_{P}) und
• aus den bezüglich der zweiten Polarität erfassten Werten des eingeprägten Statorstroms und/oder der induzierten Polradspannung (U_{P})
einen Stillstand des Rotors zu erkennen.

2. Antriebssystem nach Anspruch 1,
wobei die Steuerungseinheit ferner ausgebildet ist, in Reaktion auf einen erkannten Stillstand des Rotors einen Hinweis hierüber an einen Benutzer des Antriebssystems auszugeben, vorzugsweise anzuzeigen.

3. Antriebssystem nach Anspruch 1 oder 2,
wobei die Steuerungseinheit ferner ausgebildet ist, in Reaktion auf einen erkannten Stillstand des Rotors jeweils mit der ersten und der zweiten Polarität
• den Stator (13) mit einem Statorstrom (ls) zur Durchführung wenigstens einer Betriebsbewegung zu bestromen,
• erneut den eingeprägten Statorstrom zu erfassen und/oder die Bestromung mit dem Statorstrom (I_{S}) zu beenden und die sich hierbei einstellende induzierte Polradspannung (U_{P}) zu erfassen, und,
• falls aus den Werten des erneut erfassten eingeprägten Statorstroms und/oder aus der erneut erfassten induzierten Polradspannung (U_{P}) erneut ein Stillstand des Rotors erkannt wird, den Stator (13) mit einem Statorstrom (ls) zur Durchführung wenigstens einer Betriebsbewegung entgegen der Vorzugsrichtung zu bestromen.

4. Antriebssystem nach Anspruch 3,
wobei der Statorstrom (ls) zum Veranlassen der Drehbewegung des Rotors jeweils geringer ist als der Statorstrom (ls) zur Durchführung wenigstens der Betriebsbewegung.

5. Antriebssystem nach einem der vorangehenden Ansprüche,
wobei der Synchronmotor (1) ein geregelter Synchronmotor (1) und die Steuerungseinheit ausgebildet ist, die Bewegung des Rotors drehzahlgeregelt zu betreiben.

6. Antriebssystem nach einem der vorangehenden Ansprüche,
wobei die Steuerungseinheit ferner ausgebildet ist, die Blockierungserkennung auszuführen:
• unmittelbar vor jedem Start einer Benutzung des Synchronmotors (1),
• unmittelbar vor dem Start einer ersten Benutzung des Synchronmotors (1) bei einer Benutzung eines Geräts, welches den Synchronmotor (1) verwendet, oder
• zwischen zwei Benutzungen des Synchronmotors (1).

7. Antriebssystem nach einem der vorangehenden Ansprüche,
wobei die Steuerungseinheit ferner ausgebildet ist, die Blockierungserkennung ausgehend von einem stillstehenden Rotor des Synchronmotors (1) auszuführen:

8. Gerät, vorzugsweise Haushaltsgerät, besonders vorzugsweise Waschmaschine oder Geschirrspüler,
mit wenigstens einem Antriebssystem nach einem der vorangehenden Ansprüche.

9. Verfahren zum Betrieb eines Antriebssystems nach einem der Ansprüche 1 bis 7 mit wenigstens den folgenden Schritten:
• Bestromen (100) des Stators (13) mit einem ausreichend hohen Statorstrom (ls) mit einer ersten Polarität, um eine Drehbewegung des Rotors zu veranlassen,
• Erfassen (200) des infolge der Bestromung mit der ersten Polarität eingeprägten Statorstroms und/oder Beenden (300) der Bestromung mit dem Statorstrom (ls) und Erfassen (350) der sich hierbei einstellenden induzierten Polradspannung (U_{P}),
• Bestromen (400) des Stators (13) mit einem ausreichend hohen Statorstrom (ls) mit einer der ersten Polarität entgegengesetzten zweiten Polarität, um eine Drehbewegung des Rotors zu veranlassen,
• Erfassen (500) des infolge der Bestromung mit der zweiten Polarität eingeprägten Statorstroms und/oder Beenden (600) der Bestromung mit dem Statorstrom (ls) und Erfassen (650) der sich hierbei einstellenden induzierten Polradspannung (U_{P}), und
• Erkennen (700) eines Stillstands des Rotors
o aus den infolge der Bestromung mit der ersten Polarität erfassten Werten des eingeprägten Statorstroms und/oder der induzierten Polradspannung (U_{P}) und
o aus den infolge der Bestromung mit der zweiten Polarität erfassten Werten des eingeprägten Statorstroms und/oder der induzierten Polradspannung (U_{P}).
